# DEMANDE DE BREVET EUROPEEN

(11) **EP 1 857 942 A1**
(43) Date de publication de la demande: **21.11.2007**
(21) Numéro de dépôt: 07108138.4
(22) Date de dépôt: 14.05.2007
(51) Int. Cl.: G06F 12/06

(54) **Système d'adressage automatique d'actionneurs dans un véhicule automatique**

(30) Priorité: 17.05.2006 FR 0604390
(71) Demandeur: Valeo Systèmes Thermiques, 78321 Le Mesnil St Denis Cedex (FR)
(72) Inventeur: Moreau, Fabrice, Valeo Systèmes Thermiques, 94000, CRETEIL (FR); Aygalinc Pierre, Valeo Systèmes Thermiques, 78460, Chevreuse (FR)
(74) Mandataire: Léveillé, Christophe

(57) **Abrégé**

Système d'adressage automatique d'un ensemble d'actionneurs (11, 12, 13, 14 ; 21, 22, 23) répartis en au moins deux sous-ensembles (10, 20) disposés dans des zones distinctes d'un véhicule automobile, ledit système comprenant des moyens (31) d'adressage desdits sous-ensembles et les sous-ensembles (10, 20) comprenant une ligne (15, 25) de communication respective apte à être reliée aux moyens (31) d'adressage.

Selon l'invention, lesdits moyens d'adressage comprennent un circuit (31) d'adressage unique, commun aux sous-ensembles (10, 20) d'actionneurs, et le système comprend des moyens (40) de liaison aptes à relier lesdites lignes (15, 25) de communication des sous-ensembles (10, 20) d'actionneurs audit circuit (31) d'adressage unique.

Application aux réseaux informatifs aux systèmes embarqués dans les véhicules automobiles : climatisation, système d'éclairage, moteurs de déplacement de sièges, rétroviseurs, etc.

## Description

La présente invention concerne un système d'adressage automatique d'un ensemble d'actionneurs répartis en au moins deux sous-ensembles disposés dans des zones distinctes d'un véhicule automobile.

L'invention trouve une application particulièrement avantageuse dans le domaine de l'architecture électrique des réseaux informatifs de climatisation dans les véhicules automobiles.

On connaît actuellement des systèmes d'adressage d'actionneurs de climatisation basés sur des réseaux informatifs comprenant un tableau de commande électronique de climatisation, ou d'un calculateur électronique de climatisation, et d'actionneurs répartis dans au moins deux zones du véhicule et mettant en oeuvre l'adressage automatique. Ces actionneurs peuvent être, par exemple, des moteurs pas à pas aptes à commander divers organes de climatisation du véhicule, et, plus généralement, tout système embarqué sur un véhicule, comme le système d'éclairage, les moteurs de déplacement de sièges, les rétroviseurs, etc...

Dans le cadre d'une application à la climatisation automobile, l'invention peut utiliser des réseaux informatifs mettant en oeuvre un adressage de type LIN dans lequel les actionneurs sont placés dans deux zones distinctes de l'habitacle, par exemple un premier sous-ensemble d'actionneurs dédié à une installation de ventilation, chauffage et/ou climatisation avant, de même qu'un second sous-ensemble d'actionneurs dédié à une installation de ventilation, chauffage et/ou climatisation arrière. Le procédé d'adressage de type LIN est décrit dans la demande internationale WO02/069149.

Les systèmes connus d'adressage automatique de ce type utilisent deux réseaux informatifs à adressage LIN, au sens où le tableau de commande électronique de climatisation comprend deux circuits d'adressage dédiés à l'adressage respectif du premier et du second sous-ensembles d'actionneurs. A cet effet, chaque sous-ensemble comprend une ligne de communication, appelée bus LIN, destinée à être reliée à l'un ou l'autre des circuits d'adressage.

Le tableau de commande de climatisation comporte, en outre, soit un circuit d'alimentation électrique unique pour alimenter en parallèle les deux sous-ensembles d'actionneurs, soit deux circuits d'alimentation séparés dédiées à l'un et l'autre des sous-ensembles.

Cependant, on comprend que, dans leur architecture actuelle, les systèmes d'adressage automatique ne sont pas optimisés et ne tirent pas le meilleur parti des possibilités offertes par l'adressage automatique.

Aussi, le problème technique à résoudre par l'objet de la présente invention est de proposer un système d'adressage automatique d'un ensemble d'actionneurs répartis en au moins deux sous-ensembles disposés dans des zones distinctes d'un véhicule automobile, ledit système comprenant des moyens d'adressage desdits sous-ensembles et les sous-ensembles comprenant une ligne de communication respective apte à être reliée aux moyens d'adressage, qui permettrait d'égaler en terme d'adressage les performances obtenues avec les systèmes connus, tout en limitant les investissements en terme de moyens d'adressage.

La solution au problème technique posé consiste, selon la présente invention, en ce que lesdits moyens d'adressage comprennent un circuit d'adressage unique, commun aux sous-ensembles d'actionneurs, et en ce que le système comprend des moyens de liaison aptes à relier lesdites lignes de communication des sous-ensembles d'actionneurs audit circuit d'adressage unique.

Ainsi, le système d'adressage automatique conforme à l'invention permet de réduire à un seul le nombre de circuits d'adressage habituellement utilisés dans les systèmes connus, ce résultat étant atteint par la mise en oeuvre de moyens de liaison appropriés. Il en résulte un gain substantiel en coût de composants, doublé d'une meilleure utilisation du circuit d'adressage qui concerne maintenant l'ensemble des actionneurs au lieu de ceux appartenant à un seul sous-ensemble.

Selon un premier mode de réalisation de l'invention, lesdits moyens de liaison sont des moyens de liaison série.

Dans ce contexte de réalisation, l'invention prévoit que lesdits moyens de liaison série comprennent une ligne de connexion reliant une sortie de la ligne de communication d'un premier sous-ensemble à une entrée de la ligne de communication d'au moins un second ensemble.

En variante, il est également prévu par l'invention que lesdits moyens de liaison série comprennent un faisceau de connexion contenant, au moins, une ligne de connexion reliant une sortie de la ligne de communication d'un premier sous-ensemble à une entrée de la ligne de communication d'au moins un second sous-ensemble, et des lignes d'alimentation électrique dudit second sous-ensemble connectées aux lignes d'alimentation électrique du premier sous-ensemble.

Selon un second mode de réalisation de l'invention, lesdits moyens de liaison sont des moyens de liaison parallèle.

En particulier, lesdites lignes de communication sont connectées en parallèle sur le circuit d'adressage unique.

La description qui va suivre en regard des dessins annexés, donnés à titre d'exemples non limitatifs, fera bien comprendre en quoi consiste l'invention et comment elle peut être réalisée.

La figure 1 est un schéma d'un premier mode de réalisation d'un système d'adressage automatique conforme à l'invention.

La figure 2 est un schéma d'une variante de réalisation du système de la figure 1.

La figure 3 est un schéma d'un second mode de réalisation d'un système d'adressage automatique conforme à l'invention.

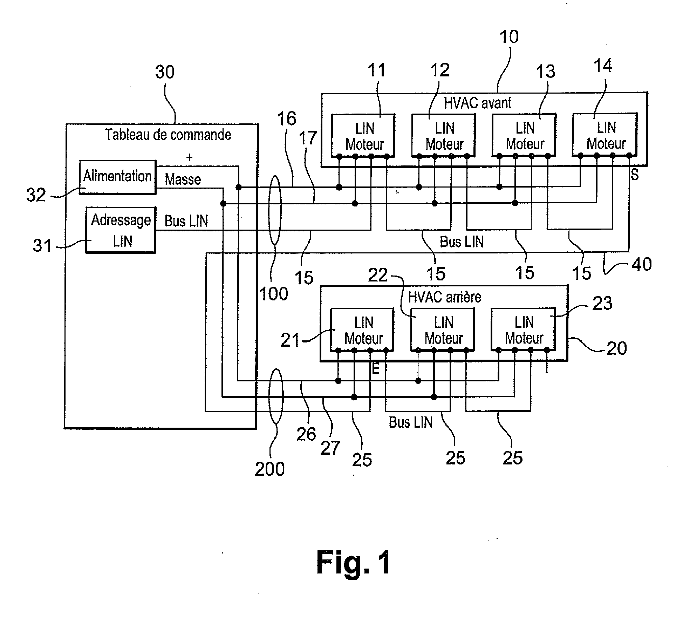

D'une manière générale, les architectures électriques présentées aux figures 1 à 3 mettent en oeuvre un réseau informatif composé d'un tableau de commande électronique, notamment de climatisation, et des actionneurs à adressage automatique, comme des moteurs électriques aptes à commander des organes de climatisation.

Bien entendu, le tableau de commande électronique peut être remplacé par un calculateur électronique, de climatisation, par exemple.

Plus particulièrement, dans les architectures décrites ici, le réseau informatif utilisé repose sur un réseau de type LIN dont le procédé d'adressage des actionneurs est décrit dans la demande internationale WO02/069149.

On rappellera seulement qu'au niveau de chaque actionneur une signature électrique est injectée dans le réseau. Une information de position relative à l'actionneur est générée à partir du signal électrique détecté. Enfin, une identification du noeud du réseau auquel est connecté l'actionneur est obtenue à partir de l'information de position relative générée.

Sur la figure 1 est représenté un système d'adressage automatique d'un ensemble d'actionneurs, ici des moteurs pas à pas référencés 11,..., 14 ; 21, ... 23, répartis en deux sous-ensembles, à savoir un premier sous-ensemble 10 correspondant par exemple à une installation de ventilation, chauffage et/ou climatisation avant d'un véhicule, regroupant les moteurs 11, 12, 13 et 14, et un second sous-ensemble 20 correspondant à une installation de ventilation, chauffage et/ou climatisation arrière regroupant les moteurs 21, 22 et 23.

Comme le montre la figure 1, chaque sous-ensemble 10, 20 est muni respectivement d'une ligne 15, 25 de communication sur laquelle circulent les données d'adressage des moteurs.

Dans le mode de réalisation de la figure 1, on peut voir que lesdites données d'adressage sont fournies par un circuit 31 d'adressage unique, commun aux deux sous-ensembles 10, 20 de moteurs, implanté dans un tableau 30, ou carte, de commande électronique de climatisation.

Ledit circuit 31 d'adressage unique est relié aux sous-ensembles 10, 20 à l'aide de moyens de liaison qui vont maintenant être décrits en détail.

Dans l'exemple de réalisation de la figure 1, ces moyens de liaison sont des moyens de liaison série, ici constitués par une ligne 40 de connexion reliant une sortie S de la ligne 15 de communication du premier sous-ensemble 10 à une entrée E la ligne 25 de communication du second sous-ensemble 20. Dans l'exemple de la figure 1, la ligne 40 de connexion passe par le tableau 30 de commande, ce qui permet de pouvoir connecter directement le second sous-ensemble 20 sur le tableau 30 par un faisceau 200 de conducteurs, tout comme le premier sous-ensemble 10 est connecté au même tableau 30 par un faisceau 100 similaire.

Les faisceaux 100, 200 de conducteurs contiennent également les lignes 16, 17 et 26, 27 d'alimentation électrique respective des sous-ensembles 10, 20 à partir d'un circuit 32 d'alimentation unique, commun aux deux sous-ensembles.

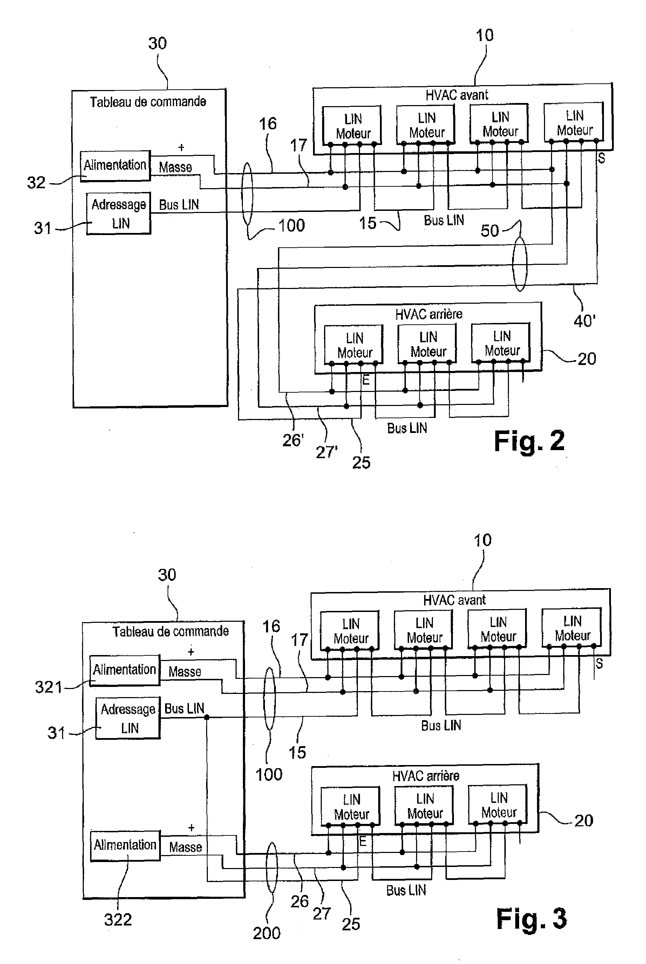

La figure 2 montre une variante de la liaison série entre les deux sous-ensembles 10, 20. Selon cette variante, un faisceau 50 de connexion intermédiaire contient une ligne 40' de connexion entre une sortie S de la ligne 15 de communication du premier sous-ensemble 10 et une entrée E de la ligne 25 de communication du second sous-ensemble 20. Ledit faisceau 50 contient également les lignes 26', 27' d'alimentation électrique du second sous-ensemble 20, lesquelles sont connectées aux lignes 16, 17 d'alimentation du premier sous-ensemble 10, ces dernières étant reliées au circuit 32 d'alimentation du tableau 30 de commande.

Dans la variante de la figure 2, le premier sous-ensemble 10 est connecté au tableau 30 au moyen du faisceau 100, puis le second sous-ensemble 20 est connecté au premier 10 au moyen du faisceau série 50.

Sur la figure 3 est représenté un second mode de réalisation de l'invention dans lequel la liaison entre les deux sous-ensembles 10, 20 d'actionneurs est parallèle.

Plus précisément, les lignes de communication 15, 25 des sous-ensembles 10, 20 sont connectées en une connexion parallèle 60 sur le circuit 31 d'adressage unique du tableau 30.

Dans ce mode de réalisation, chaque sous-ensemble 10, 20 a sa propre alimentation électrique 321, 322, permettant ainsi la sélection exclusive de chacun des sous-ensembles 10, 20 d'actionneurs afin d'effectuer l'adressage automatique de ces actionneurs par l'intermédiaire de la même ligne de communication 15, 25 du fait de la connexion parallèle 60 du circuit 31 d'adressage unique du tableau 30.

Les deux sous-ensembles sont connectés séparément sur le tableau 30 respectivement au moyen des faisceaux 100, 200.

On notera que les sous-ensembles sont des réseaux informatifs dédiés aux systèmes embarqués dans un véhicule automobile tel que par exemple installation de climatisation avant et arrière, système d'éclairage gauche, droite, avant ou arrière, moteurs de déplacement de sièges (dossier et assise), rétroviseurs gauche et droite.

## Revendications

1. Système d'adressage automatique d'un ensemble d'actionneurs (11, 12, 13, 14 ; 21, 22, 23) répartis en au moins deux sous-ensembles (10, 20) disposés dans des zones distinctes d'un véhicule automobile, ledit système comprenant des moyens (31) d'adressage desdits sous-ensembles et les sous-ensembles (10, 20) comprenant une ligne (15, 25) de communication respective apte à être reliée aux moyens (31) d'adressage, **caractérisé en ce que** lesdits moyens d'adressage comprennent un circuit (31) d'adressage unique, commun aux sous-ensembles (10, 20) d'actionneurs, et **en ce que** le système comprend des moyens (40 ; 50 ; 60) de liaison aptes à relier lesdites lignes (15, 25) de communication des sous-ensembles (10, 20) d'actionneurs audit circuit (31) d'adressage unique.

2. Système selon la revendication 1, **caractérisé en ce que** lesdits moyens de liaison sont des moyens (40 ; 50) de liaison série.

3. Système selon la revendication 2, **caractérisé en ce que** lesdits moyens de liaison série comprennent une ligne (40) de connexion reliant une sortie (S) de la ligne (15) de communication d'un premier sous-ensemble (10) à une entrée (E) de la ligne (25) de communication d'au moins un second ensemble (20).

4. Système selon la revendication 2, **caractérisé en ce que** lesdits moyens de liaison série comprennent un faisceau (50) de connexion contenant, au moins, une ligne (40') de connexion reliant une sortie (S) de la ligne (15) de communication d'un premier sous-ensemble (10) à une entrée (E) de la ligne (25) de communication d'au moins un second sous-ensemble (20), et des lignes (26', 27') d'alimentation électrique dudit second sous-ensemble (20) connectées aux lignes (16, 17) d'alimentation électrique du premier sous-ensemble (10).

5. Système selon la revendication 1, **caractérisé en ce que** lesdits moyens de liaison sont des moyens (60) de liaison parallèle.

6. Système selon la revendication 5, **caractérisé en ce que** chaque sous-ensemble (10, 20) d'actionneurs dispose d'une alimentation électrique (321, 322) qui lui est propre.

7. Système selon l'une des revendications 5 ou 6, **caractérisé en ce que** lesdits moyens de liaison parallèle comprennent une connexion (60) parallèle desdites lignes (15, 25) de communication sur le circuit (31) d'adressage unique.
